(19) Europäisches Patentamt
European Patent Office
Office européen des brevets

(11) **EP 2 317 787 A1**

(12) **EUROPEAN PATENT APPLICATION**

(43) Date of publication:
**04.05.2011 Bulletin 2011/18**

(51) Int Cl.:
***H04W 16/10*** *(2009.01)*

(21) Application number: **09306030.9**

(22) Date of filing: **29.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Alcatel Lucent**
**75008 Paris (FR)**

(72) Inventors:
• **Feki, Afef**
**91620 Nozay (FR)**

• **Capdevielle, Véronique**
**91620 Nozay (FR)**

(74) Representative: **Hervouet, Sylvie et al**
**Feray Lenne Conseil**
**Le Centralis**
**63, avenue du Général Leclerc**
**92340 Bourg-la-Reine (FR)**

(54) **A method for sharing a radio frequency band among contending cells**

(57)     A method, in a wireless network, for sharing a radio frequency band divided into N sub-bands $SB_i$ for i in [1,N], among contending cells, comprising the steps of:
- computing (20), for a next time $t$+1, for each sub-band $SB_i$, a decisional function value $DF_{i,t+1}$, using a function $DF$, where $DF$ is an increasing function of a variable $S_{i,t+1}$ indicative of a cumulative reward previously scored by said sub-band $SB_i$, and a decreasing function of a variable $n_{i,t+1}$ indicative of a number of previous selections of said sub-band $SB_i$,
- selecting (21) the sub-band $SB_g$ whose decisional function value $DF_{g,t+1}$ is maximum among all $DF_{i,t+1}$, that is

$$20 \qquad DF_{i,t+1} = \frac{s_{i,t+1} + \lambda_{i,t+1}}{n_{i,t+1}}$$

$$21 \qquad SB_g, \ DF_{g,t+1} = \max_{1 \le i \le N} DF_{i,t+1}$$

$$22$$

$$23 \qquad r_{i,t}$$

$$24 \qquad \begin{aligned} s_{i,t+1} &= \rho_s \cdot s_{i,t} + r_{i,t} \\ n_{i,t+1} &= \rho_n \cdot n_{i,t} + \Pi(i = g) \end{aligned}$$

FIG. 3

EP 2 317 787 A1

**Description**

The technical domain of the invention is the domain of wireless radio access communication networks.

In wireless radio access communication networks, the radio resources are limited comparing to the needs of the cells. A wholly available frequency band is parted into frequency sub-bands identified in frequency and time dimensions. At a given time a cell needs one such frequency sub-band to transmit on it. Said allocated frequency sub-band is then scheduled among users attached to said cell, in order to provide communication services to said users. It is primordial to efficiently share the frequency sub-bands among contending cells. The sharing procedure employed highly impacts the performances of the overall functioning of the network.

This can be achieved, in an efficient manner, with a centralized decision making unit or referee that is in charge of allocating the frequency sub-bands among the different demanding users.

Nevertheless, such a centralized unit is not always possible. In case of absence of such centralized unit, the sharing needs to be performed in a distributive manner between all the cells. Thus, each cell has to decide alone which frequency sub-band to select, in order to transmit on it. This selection must however ensure a globally good functioning for all contenting cells sharing the whole available frequency band.

Another potential solution for distributed radio frequency band sharing is the use of the Carrier Sense Multiple Access with Collision Avoidance, CSMA/CA, known protocol. Said protocol guarantees an efficient sharing between different contending cells on the same radio frequency band, thanks to the use of an appropriate collision avoidance mechanism. The employed procedure makes use of specific messages between different contending cells that indicate the current usage of the channel. A distributed coordination function, DFC, is a MAC technique used in IEEE 802.11 standard with the CSMA/CA protocol. It can also use a virtual carrier sense with RTS/CTS control frames. But, this leads to a signalization overhead and also requires information exchange between cells. Such information exchange is not always possible.

Each cell needs to make a decision on the more appropriate frequency sub-band to use. To this end, the cell makes its decision according to metrics that can be provided mainly through two means:

> **Reported measurements** from users attached to the cell. In this case, the reported measurements (eg: throughput, ack/nack counters, ...) are indicators of the performance of the frequency sub-band currently allocated to the cell. Thus, the cell will have information limited to the already used band and will miss measurements on the other frequency sub-bands of the rest of the wholly available frequency band.
>
> **Sensing measurements**. In this case, the cell makes sensing measurements in some or all of the frequency sub-bands, to evaluate their use ratio and the experienced interference on each of them. This sensing process can be made periodically or on demand. This solution allows getting the information needed for the decision. But complexity of sensing operation and inefficiency when sensing leads to traffic interruption. Another prejudicial effect is that collisions may occur when two cells simultaneously sense a same channel.

Regarding these two alternatives, and the drawbacks exhibited by the prior art solution, there is a need to find out an efficient solution that optimises the use of the whole available frequency band, while avoiding the previous noted drawbacks. In other words, this stands for ensuring maximum frequency band availability to a cell with minimum costs linked to obtain information about the frequency band usage/availability.

This could be traduced through a compromise between two objectives:

- Exploiting the maximum of available resources and ensuring the highest perceived QoS for end users,
- Exploring portions of the frequency band that are not yet used thus maintaining an up to date quality measurement of whole frequency band. This enables to permanently detect better opportunities in resources, which leads to performance improvement.

To this end, the invention proposes a distributed method that steers a cell in the choice of the more appropriate frequency sub-bands to transmit on it.

The object of the invention is a method, in a wireless network, for sharing a radio frequency band divided into N sub-bands $SB_i$ for i in [1,N], among contending cells, comprising the steps of:

- computing, for a next time $t$+1, for each sub-band $SB_i$, a decisional function value $DF_{i,t+1}$, using a function $DF$, where $DF$ is an increasing function of a variable $s_{i,t+1}$ indicative of a cumulative reward previously scored by said sub-band $SB_i$, and a decreasing function of a variable $n_{i,t+1}$ indicative of a number of previous selections of said sub-band $SB_i$,

- selecting the sub-band $SB_g$ whose decisional function value $DF_{g,t+1}$ is maximum among all $DF_{i,t+1}$, that is

$$DF_{g,t+1} = \max_{1 \leq i \leq N} DF_{i,t+1} \ .$$

According to another feature of the invention, the variable $s_{i,t+1}$ indicative of a cumulative reward previously scored by said sub-band $SB_i$ until time $t$+1, is recursively determined, for each sub-band $SB_i$, by adding a reward value $r_{i,t}$ scored by said sub-band $SB_i$ at previous time $t$ to the value of variable $s_{i,t}$ indicative of a cumulative reward previously scored by said sub-band $SB_i$ until time $t$ multiplied by a first discount factor $\rho_s$, with $0 < \rho_s \leq 1$ , that is $s_{i,t+1} = \rho_s \cdot s_{i,t} + r_{i,t}$, starting with a null initial value $s_{i,0} = 0$.

According to another feature of the invention, the reward value $r_{i,t}$ scored by said sub-band $SB_i$ at previous time $t$ is null, if sub-band $SB_i$ has not been selected at previous time $t$, and is equal to a performance score obtained by said sub-band $SB_i$ at previous time $t$, being computed from experienced throughput, data rate, signal to interference and noise ratio, channel quality indicator, or any combination thereof, determined during previous time $t$, if sub-band $SB_i$ has been selected.

According to another feature of the invention, the variable $n_{i,t+1}$ indicative of a number of previous selections of said sub-band $SB_i$ until time $t$+1 is recursively determined, for each sub-band $SB_i$, by adding one if sub-band $SB_i$ has been selected at previous time $t$ to the value of variable $n_{i,t}$ indicative of a number of previous selections of said sub-band $SB_i$ until time $t$ multiplied by a second discount factor $\rho_n$, with $0<\rho_n\leq1$, that is $n_{i,t+1} = \rho_n \cdot n_{i,t}+\Pi(i = g)$ with $\Pi(i = g)$ =1 when i=g and $\Pi(i = g) = 0$ otherwise, g representing at each time the index of the selected sub-band, starting with a null initial value $n_{i,0} =0$.

According to another feature of the invention, the decisional function value $DF_{i,t+1}$ is computed by the formula:

$$DF_{i,t+1} = DF\left(s_{i,t+1}, n_{i,t+1}\right) = \frac{s_{i,t+1} + \lambda_{i,t+1}}{n_{i,t+1}} \ ,$$

where $\lambda_{i,t+1}$ is an exploration parameter.

According to another feature of the invention, exploration parameters $\lambda_{i,t+1}$ are constants.

According to another feature of the invention, parameters $\lambda_{i,t+1}$ are determined by a ratio of a first parameter $a_{i,t+1}$ to a second parameters $b_{i,t+1}$, that is $\lambda_{i,t+1} = \dfrac{a_{i,t+1}}{b_{i,t+1}}$ .

According to another feature of the invention, the first parameter $a_{i,t+1}$ is computed at each time as the variance of the reward value $r_i$, that is $a_{i,t+1} = \text{var}(r_i)$.

A first advantage of the invention is that it takes profit of transmission over a selected frequency sub-band to evaluate the resulting performances and thus to maintain availability and quality information.

Another advantage of the invention is that it provides an optimized sharing of the whole available frequency band among contending cells, without the necessity of using a centralized referee.

Another advantage of the invention is that it provides an optimized steering function, without the need of explicit sensing measurements over the frequency band.

Another advantage of the proposed method is that it can also take into account and includes coordination information exchanged between cells, or even sensing information, when available.

Another advantage of the invention is that it provides a global self adaptive solution to the problem of resource sharing, performed in a distributed manner.

Another advantage of the invention is that it can be applied to heterogeneous systems, hosting different radio access technologies but sharing a same frequency band. Thus, the invention allows interoperability between these different systems.

Others features, details and advantages of the invention will become more apparent from the detailed illustrating description given hereafter with respect to the drawings on which:

- figure 1 shows two contending cells sharing access to a same frequency band,
- figure 2 shows a time diagram indicating allocation of sub-bands to these two cells,
- figure 3 show a typical sequencing diagram of the method.

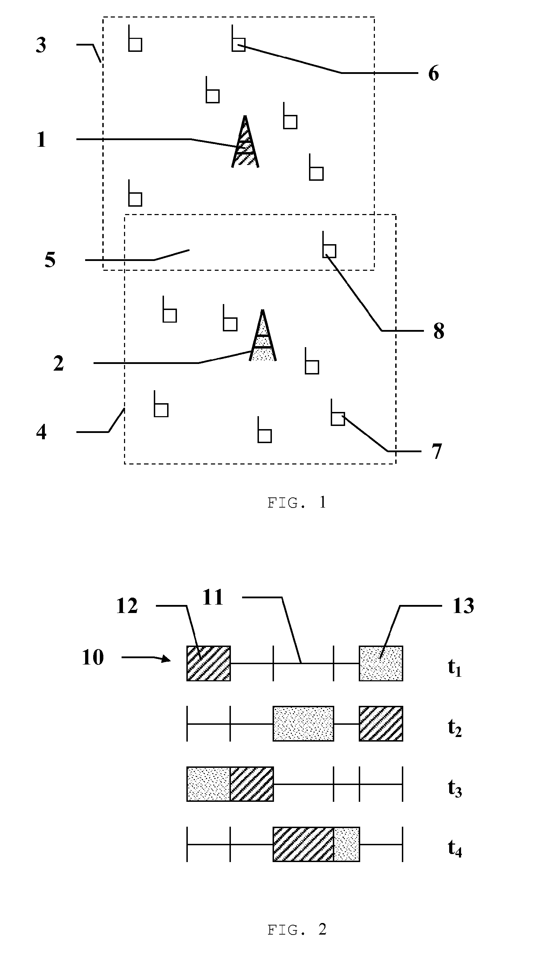

In a wireless radio network space is parted in geographical area cells. As shown in figure 1, two such area cells 3, 4 are figured. For each area cell 3, 4, a base station 1, 2 in is charge of providing radio communications to mobile terminals 6, 7, 8 present in the area cell 3, 4. Mobile terminal 6, present in area cell 3, can then establish a radio link with base station 1, in order to connect to the network.

A base station 1, 2 is in charge of covering one area cell 3, 4. Since the radio range of a base station 1, 2, generally coincides with the area cell geographical boundary 3, 4, a base station 1, 2 is often, abusively, called a cell.

In order to fully cover a given spatial area, there must be overlap 5, in between area cells 3, 4. In order not to create interferences in that overlap 5, two neighbouring cells 1, 2, must not use frequencies in common. Furthermore, a mobile terminal 8 may be in said overlap 5. It can then be serviced by any one of the two cells 1, 2. In order to distinguish one of said cells, both cells 1, 2, must use different frequencies.

In order to solve the allocation problem, the whole frequency band available to cells 1, 2, is parted in sub-bands. With reference to figure 2, the whole frequency band 10 is figured by a horizontal line, figuring a frequency range. As shown, said frequency band 10 is parted in N sub-bands 11. Here N=5. Said partition does not necessarily provide sub-bands of equal widths. The number N of sub-bands 11 and their width characteristics are determined so that a cell 1, 2, can use said sub-band 11 to service mobile terminals 6, 7, 8 present in its range cell 3, 4. The diagram of figure 2 shows an illustrative allocation of sub bands 11 to the two said cells 1, 2, at four different times $t_1..t_4$. For convenience, the sub-band 12 allocated to cell 1 is figured hashed, while the sub-band 13 allocated to cell 2 is figured dotted.

One important point of the invention is that it is distributed, in that each cell 1, 2, has to decide which sub-band 11 to use at next time, without the need to communicate with other cells. Instead, each cell 1, 2, uses information gained from the transmission history about quality and availability of a given sub-band 11.

Moreover, the method is dynamic, always updating said information, and then adaptive. This is advantageous, since the radio environment may change, due e.g. to the settling of a new cell.

Another important point of the invention is to avoid, or at least to limit, the use of sensing measurement, in order to increase the time during which a cell is functionally operational and transmitting.

For all these reasons, the invention proposes a method that uses reported measurements obtained from the mobile terminals 6, 7, 8, during utilization, and learns from the results of the past to derive a forecast for the future. In order to enrich and/or update the information about the different sub-bands 11, changing of sub-bands is thus encouraged. One goal of the <wqGTBinvention is to realize a trade-off between exploration and exploitation.

The main idea of the invention is, the whole frequency band 10 being parted into N sub-bands $SB_i$. 11, where the index i describes from 1 to N the different sub-bands $SB_i$. 11, to compute, for a next time $t+1$, for each sub-band $SB_i$, 11, a decisional function value $DF_{i,t+1}$. Said value may be obtained using a function $DF$. $DF_{i,t}$ respectively $DF_{i,t+1}$, is the value of the $DF$ function for the i$^{th}$ sub-band $SB_i$ for previous time $t$, respectively for next time $t+1$.

Two variables are introduced in this computation, in order to realise a compromise between two contradictory objectives: to obtain the best immediate rewarding sub-band allocation, and to explore other unused sub-bands in order to reserve medium or long term solutions.

A first variable $s$ is indicative of a cumulative reward previously scored by a given sub-band $SB_i$, 11. $s_{i,t}$, respectively $s_{i,t+1}$, is the value of variable $s$ for the i$^{th}$ sub-band $SB_i$, until time $t$, respectively until time $t+1$.

A second variable $n$ is indicative of a number of previous selections of a given sub-band $SB_i$, 11. $n_{i,t}$, respectively $n_{i,t+1}$, is the value of variable $n$ for the i$^{th}$ sub-band $SB_i$, until time $t$, respectively until time $t+1$.

The aforementioned compromise is reach when $DF$ is an increasing function of the variable s, and a decreasing function of the variable $n$.

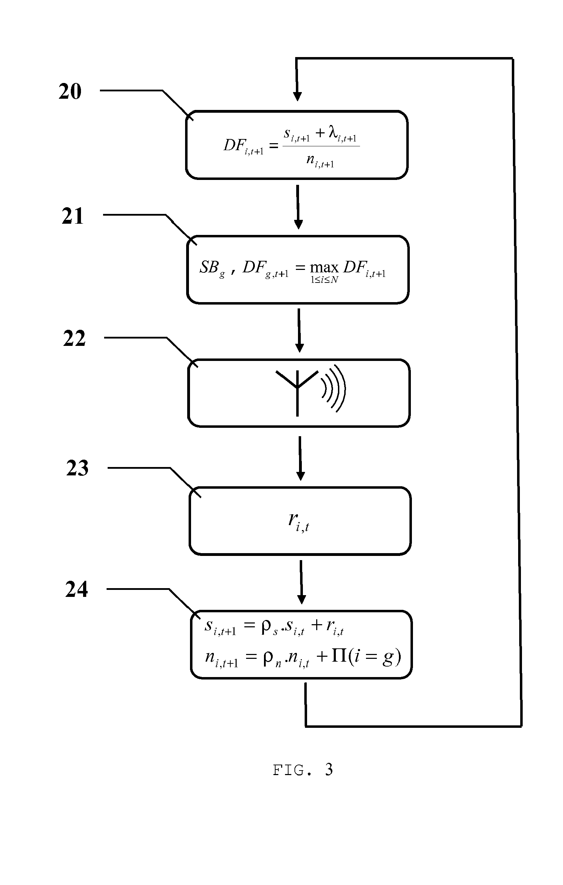

Figure 3 shows an example of a possible sequencing of the method. Decisional functions values $DF_{i,t+1}$ are computed in a first step 20.

In a second step 21, among all the sub-bands $SB_i, 0 \leq i \leq N$, the method selects one sub-band $SB_g$ whose decisional function value $DF_{g,t+1}$ is maximum among all $DF_{i,t+1}$, that is $DF_{g,t+1} = \max_{1 \leq i \leq N} DF_{i,t+1}$. . The index g represents, at each time, the selected sub-band $SB_g$, that is the sub-band $SB_g$ that maximises the decisional function $DF$.

Said selected sub-band $SB_g$ is then used during a step 22 to transmit between the cell 1 and its associated mobile terminals 6, 7, 8. During this step 22, measurements relative to said selected sub-band $SB_g$ are also made.

Since variable $s$ is indicative of the quality offered by a given frequency sub-band 11, a high quality and thus a high value of $s$ would tend to increase the value of $DF$, and thus would tend to have said sub-band 11 selected. However this is tempered by the fact that the more a sub-band 11 is selected, the higher is the value of $n$, thus leading to decrease the value of $DF$, then offering opportunities for selecting among other sub-bands 11.

A possible way of determining a value $s_{i,t+1}$ of said variable $s$ is by recurrence. The value $s_{i,t+1}$ indicative of a cumulative reward scored by the i$^{th}$ sub-band $SB_i$ until time $t+1$, may then be determined, for each sub-band $SB_i$, by adding a reward value $r_{i,t}$ scored by said sub-band $SB_i$ at previous time $t$ to the value of variable $s_{i,t}$ indicative of a cumulative reward previously scored by said sub-band $SB_i$ until time $t$. So doing an exact cumulative reward value would be obtained. Advantageously, the method first multiplies by a first discount factor $\rho_s$. Said first discount factor $\rho_s$ is chosen between 0 and 1, and has the effect of reducing the influence of passed rewards. This can mathematically be expressed by:

$$s_{i,t+1} = \rho_s . s_{i,t} + r_{i,t} \; ,$$

with $0 < \rho_s \leq 1$

The recurrence computation must start with a first term, whose value can be chosen equal to an arbitrary value, e.g. zero, that is $s_{i,0} = 0$. At least, all the first terms $s_{i,0}$ must be equal, whatever i.

It has been said previously, that the reported measurements are made only during the use of a sub-band 11. Consequently no information is gained when a sub-band 11 is not selected. Thus the reward value $r_{i,t}$ scored by the ith sub-band $SB_i$ at previous time $t$ is advantageously considered null, when said ith sub-band $SB_i$ has not been selected at previous time $t$.

But, a non zero reward value $r_{i,t}$ is provided when the ith sub-band $SB_i$ has been selected at previous time $t$. Said reward value $r_{i,t}$ is taken equal to a performance score obtained by said sub-band $SB_i$ at previous time $t$, during use. Said performance score may be chosen among any indicator of the quality experienced on said sub-band 11. It can be e.g. an experienced throughput, or an experienced data rate, or an experienced signal to interference and noise ratio, or a channel quality indicator such as an ACK counter, etc. the performance score may also be obtained by any combination of said previously mentioned indicators. All of these indicators are determined at previous time $t$, during the use of said ith sub-band $SB_i$, selected at previous time $t$. Said measurements are advantageously made without interrupting or perturbing in any way the normal functioning based on communications between the cell 1, 2, and its attached mobile terminals 6, 7, 8.

With reference to figure 3, the rewards $r_{i,t}$ are determined at step 23.

A possible way of determining a value $n_{i,t+1}$ of said variable $n$ is by recurrence. The value $n_{i,t+1}$ indicative of a number of selections of said ith sub-band $SB_i$ until time $t+1$, may then be determined, for each sub-band $SB_i$, by adding one if sub-band $SB_i$ has been selected at previous time $t$ to the value of variable $n_{i,t}$ indicative of the number of previous selections of said sub-band $SB_i$ until time $t$. If sub-band $SB_i$ has not been selected, nothing is added. So doing an exact number of selections value would be obtained. Advantageously, the method first multiplies by a second discount factor $\rho_n$. Said second discount factor $\rho_n$ is chosen between 0 and 1, and has the effect of reducing the influence of passed selections. This can mathematically be expressed by:

$$n_{i,t+1} = \rho_n . n_{i,t} + \Pi(i = g) , \quad \text{with} \quad 0 < \rho_n \leq 1 ,$$

with $\Pi(i = g) = 1$ when i=g and $\Pi(i = g) = 0$ otherwise.

The recurrence computation must start with a first term, whose value can be chosen equal to an arbitrary value, e.g. zero, that is $n_{i,0} = 0$ . At least, all the first terms $n_{i,0}$ must be equal, whatever i.

The value of both discount factors and $\rho_s$, and $\rho_n$, may be chosen independently. Their values depend on the relative weight accorded to the past. The smaller the discount factor is, the lesser the relative weight is. A value of 0.9 has proven to give good results.

With reference to figure 3, rewards $r_{i,t}$ being determined, the two recurrence formulae may be used to update the new values of $s_{i,t+1}$ and $n_{i,t+1}$ at step 24. Then the method considers the next time, by incrementing the time index, that is $t$ is replaced by $t+1$, and branch back again to step 20 to determine a new set of decisional function values $DF_i$.

A possible function $DF$ that satisfies the aforementioned conditions on variations, is given by the formula

$$DF(s,n) = \frac{s + \lambda}{n}$$ . This function is an increasing function of the variable $s$, and a decreasing function of the variable $n$, and $\lambda$ is an exploration parameter. The higher is the value of $\lambda$, the higher is the trend to change of sub-band 11. According to said formula, the decisional function value $DF_{i,t+1}$ is computed by the formula:

$$DF_{i,t+1} = DF\big(s_{i,t+1}, n_{i,t+1}\big) = \frac{s_{i,t+1} + \lambda_{i,t+1}}{n_{i,t+1}} \; ,$$ $\lambda_{i,t+1}$ being an exploration parameter, that may vary from one sub-band to another. $\lambda_{i,t+1}$ may also vary in function of time.

Said exploration parameter $\lambda$ allows including in the formulation either coordination or sensed information, as will be detailed later.

According to a first embodiment, all $\lambda$ are chosen constants.

In order to provide a physical meaning to said exploration parameter $\lambda$, it may be determined out of a ratio of a first parameter $a$ to a second parameter $b,$ that is $\lambda = \dfrac{a}{b}$, or applied to the $i^{th}$ sub-band 11, at time $t$+1, $\lambda_{i,t+1} = \dfrac{a_{i,t+1}}{b_{i,t+1}}$. In that formulation, parameter $b$ may be understood as a weight applied to the variable $n,$ in function of the importance given to said variable. Parameter $b$ is preferentially a constant. A value of 2 has proven to give good results.

As already mentioned λ, and thus $a$ when $b$ is constant, may be constant.

Alternately, parameter $a$ may be varying in function of other variables of the problem. For instance, parameter $a$ may be recomputed at each time as a function of e.g. the reward value r. A possibility is to compute said first parameter $a,$ at each time, as the variance of the reward value $r,$ that is $a$ = var($r$), or applied to the $i^{th}$ sub-band at time $t$+1, $a_{i,t+1}$ = var($r_i$). Said variance of the reward value r is determined over time. The effect so obtained is if the reward value r is very varying, then the reward value r is not stationary and more exploration of the sub-band is needed to get the right/ correct information.

As described until now, the method is distributed, and each cell 1, 2, during its decision process, relies on its own and does not need any external information, e.g. exchanged with neighbouring contending cells. This corresponds to the general case where contending cells 1, 2 are not necessary linked and do not share a common communication tool.

However, in particular cases, when such coordination information is exchanged between cells and is available, said information can be advantageously used. Said information may consist e.g. in a given sub-band $SB_i$ announced to be allocated to a neighbouring cell and thus unavailable. Such information is introduced in the method by adjusting the exploration parameters $\lambda_i$ corresponding to said unavailable sub-band $SB_i,$ in order that the resulting decision function value $DF_i$ has lesser chance to be maximum. This is obtained by decreasing the $\lambda_i$ corresponding to said busy sub-band $SB_i$.

As described until now, the method does not need any sensing information.

However, in particular cases, when such sensing information is available, said information can be advantageously used. Said information can be obtained from sensing measurements operated by the cell 1 itself or from sensing measurements operated by another cell or another mean and then transmitted to the cell. Said information may consist e.g. in a given sub-band $SB_i$ announced to be either occupied or perturbed, and thus unavailable. Here again, such information is introduced in the method by decreasing the $\lambda_i$ corresponding to said busy sub-band $SB_i$.

## Claims

1.  A method, in a wireless network, for sharing a radio frequency band (10) divided into N sub-bands $SB_i$ (11) for i in [1,N], among contending cells (1, 2), *characterized in that* it comprises the steps of:

    - computing (20), for a next time $t$+1, for each sub-band $SB_i$ (11), a decisional function value $DF_{i,t+1}$, using a function $DF,$ where $DF$ is an increasing function of a variable $s_{i,t}$+1 indicative of a cumulative reward previously scored by said sub-band $SB_i$ (11), and a decreasing function of a variable $n_{i,t+1}$ indicative of a number of previous selections of said sub-band $SB_i$ (11),

    - selecting (21) the sub-band $SB_g$ whose decisional function value $DF_{g,t+1}$ is maximum among all $DF_{i,t+1}$, that is $DF_{g,t+1} = \max\limits_{1 \le i \le N} DF_{i,t+1}$.

2.  The method of claim 1, where variable $s_{i,t+1}$ indicative of a cumulative reward previously scored by said sub-band $SB_i$ (11) until time $t$+1, is recursively determined (24), for each sub-band $SB_i,$ by adding a reward value $r_{i,t}$ scored by said sub-band $SB_i$ at previous time $t$ to the value of variable $s_{i,t}$ indicative of a cumulative reward previously scored by said sub-band $SB_i$ until time $t$ multiplied by a first discount factor $\rho_s,$ with $0 < \rho_s \le 1$, that is $s_{i,t+1} = \rho_s \cdot s_{i,t} + r_{i,t},$ starting with a null initial value $s_{i,0} = 0$.

3.  The method of claim 2, where the reward value $r_{i,t}$ scored by said sub-band $SB_i$ at previous time $t$ is null, if sub-band $SB_i$ has not been selected at previous time $t$.

4.  The method of claim 2 or 3, where the reward value $r_{i,t}$ scored by said sub-band $SB_i$ (11) at previous time $t$ is equal to a performance score obtained by said sub-band $SB_i$ at previous time $t,$ said performance score being computed from experienced throughput, data rate, signal to interference and noise ratio, channel quality indicator, or any combination thereof, determined at previous time *t*, if sub-band $SB_i$ has been selected at previous time *t*.

5. The method of any one of claims **1** to **4**, where variable $n_{i,t+1}$ indicative of a number of previous selections of said sub-band $SB_i$ (11) until time *t*+1 is recursively determined (24), for each sub-band $SB_i$, by adding one if sub-band $SB_i$ has been selected at previous time *t* to the value of variable $n_{i,t}$ indicative of a number of previous selections of said sub-band $SB_i$ until time *t* multiplied by a second discount factor $\rho_n$, with $0<\rho_n\leq1$, that is $n_{i,t+1} = \rho_n \cdot n_{i,t} + \Pi(i = g)$ with $\Pi(i = g)$ = 1 when i=g and $\Pi(i = g)$ = 0 otherwise, g representing at each time the index of the selected sub-band, starting with a null initial value $n_{i,0}$ = 0.

6. The method of any one of claims **1** to **5**, where the decisional function value $DF_{i,t+1}$ is computed by the formula:

$$DF_{i,t+1} = DF\left(s_{i,t+1}, n_{i,t+1}\right) = \frac{s_{i,t+1} + \lambda_{i,t+1}}{n_{i,t+1}} \ ,$$

where $\lambda_{i,t+1}$ is an exploration parameter.

7. The method of claim **6**, where exploration parameters $\lambda_{i,t+1}$ are constants.

8. The method of claim **6**, where exploration parameters $\lambda_{i,t+1}$ are determined by a ratio of a first parameter $a_{i,t+1}$ to a second parameter $b_{i,t+1}$, that is $\lambda_{i,t+1} = \dfrac{a_{i,t+1}}{b_{i,t+1}}$ .

9. The method of claim **8**, where first parameter $a_{i,t+1}$ is computed at each time as the variance of the reward value $r_i$, that is $a_{i,t+1}$ = var($r_i$).

10. The method of claim **8** or **9**, where second parameter $b_{i,t+1}$ is equal to 2.

11. The method of any one of claims **6** to **10**, where coordination information is received from neighbouring contending cells, and where exploration parameters $\lambda_{i,t+1}$ are adjusted in accordance with said coordination information, decreasing a $\lambda_{i,t+1}$ corresponding to a sub-band $SB_i$ that is known from said coordination information to be busy.

12. The method of any one of claims **6 to 11**, where sensing information is available, and where exploration parameters $\lambda_{i,t+1}$ are adjusted in accordance with said sensing information, decreasing a $\lambda_{i,t+1}$ corresponding to a sub-band $SB_i$ that is known from said sensing information to be busy.

3

6

1

5

8

2

4

7

FIG. 1

12    11    13

10

t$_1$

t$_2$

t$_3$

t$_4$

FIG. 2

**20**

$$DF_{i,t+1} = \frac{s_{i,t+1} + \lambda_{i,t+1}}{n_{i,t+1}}$$

**21**

$$SB_g \text{ , } DF_{g,t+1} = \max_{1 \le i \le N} DF_{i,t+1}$$

**22**

**23**

$$r_{i,t}$$

**24**

$$s_{i,t+1} = \rho_s . s_{i,t} + r_{i,t}$$
$$n_{i,t+1} = \rho_n . n_{i,t} + \Pi(i=g)$$

FIG. 3

Europäisches
Patentamt

European
Patent Office

Office européen
des brevets

## EUROPEAN SEARCH REPORT

Application Number

EP 09 30 6030

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2007/036003 A1 (ITEK PTY LTD [AU]; LILITH NIMROD [AU]; DOGANCAY KUTLUYIL [AU]) 5 April 2007 (2007-04-05) | 1-8 | INV.<br>H04W16/10 |
| A | * page 4, line 13 - page 7, line 20 *<br>----- | 9-12 | |
| Y | AFEF BEN HADJ ALAYA-FEKI ET AL: "Dynamic spectrum access with non-stationary Multi-Armed Bandit"<br>6 July 2008 (2008-07-06), SIGNAL PROCESSING ADVANCES IN WIRELESS COMMUNICATIONS, 2008. SPAWC 2008. IEEE 9TH WORKSHOP ON, IEEE, PISCATAWAY, NJ, USA, PAGE(S) 416 - 420 , XP031345974 ISBN: 9781424420452 | 1-8 | |
| A | * page 416, left-hand column, line 1 - page 420, right-hand column, line 23 *<br>----- | 9-12 | |

TECHNICAL FIELDS
SEARCHED      (IPC)

H04W

The present search report has been drawn up for all claims

| Place of search | Date of completion of the search | Examiner |
|---|---|---|
| The Hague | 31 March 2010 | Poort, Ingrid |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 30 6030

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2010

| Patent document cited in search report | Publication date | Patent family member(s) | Publication date |
|---|---|---|---|
| WO 2007036003 A1 | 05-04-2007 | NONE | |

EPO FORM P0459

For more details about this annex : see Official Journal of the European Patent Office, No. 12/82